# EUROPEAN PATENT APPLICATION

(11) **EP 4 797 219 A1**
(43) Date of publication of application: **26.08.2026**
(21) Application number: 26157058.4
(22) Date of filing: 06.02.2026
(51) Int. Cl.: G06V 10/74

(54) **COIN RECOGNITION DEVICE, COIN RECOGNITION METHOD, AND COIN RECOGNITION PROGRAM**

(30) Priority: 19.02.2025 JP 2025024931
(71) Applicant: GLORY LTD., Himeji-shi Hyogo 670-8567 (JP)
(72) Inventor: MORISHITA, Ruka, Himeji-shi 670-8567 (JP); TADA, Kazuya, Himeji-shi 670-8567 (JP); MORIWAKE, Ryo, Himeji-shi 670-8567 (JP)
(74) Representative: Page White Farrer

(57) **Abstract**

Provided are a coin recognition device, a coin recognition method, and a coin recognition program that can improve the angle-alignment performance for coins with a symmetrical pattern. The coin recognition device includes: an image acquisition unit configured to acquire an input image of a coin to be recognized; a reference angle acquisition unit configured to acquire a reference angle having a best matching score among matching scores obtained by performing matching between the input image and a pre-registered first reference image in increments of a first shift angle; a rotation angle determination unit configured to determine a rotation angle of the coin based on matching scores obtained by performing matching between the input image and a pre-registered second reference image at least at the reference angle and at a designated angle shifted from the reference angle by a specific angle; and a recognition unit configured to recognize the coin using the rotation angle of the coin determined by the rotation angle determination unit.

## Description

### TECHNICAL FIELD

The present disclosure relates to coin recognition devices, coin recognition methods, and coin recognition programs.

### BACKGROUND ART

In coin recognition, because the objects to be recognized are circular (or nearly circular), angle alignment is commonly performed during matching.

For example, JP 6002921 B discloses a disk identification method in which a first reference image is obtained from a captured image of a reference disk, a plurality of second reference images are generated by rotating the first reference image at different angles of rotation, and third reference images are obtained by translating the first and second reference images. An image of the disk to be identified is then compared with these three types of reference images to correct for pattern rotation and positional deviation.

JP 2006-39372 A discloses an image identification method in which image data is obtained in advance for each predetermined angle of rotation and positional deviation, angle-of-rotation information and positional deviation information are added to the image data, and a matching dictionary is generated by overlaying and storing image data classified according to angle and positional deviation. The image of the inserted medium is then compared with the matching dictionary to enable recognition in a single matching process.

### SUMMARY

However, techniques such as the disk identification method disclosed in JP 6002921 B and the image identification method disclosed in JP 2006-39372 A cannot accurately obtain the angle of rotation of a coin when the coin pattern is substantially symmetrical in the vertical direction and/or the horizontal direction, or when the coin pattern is periodic, that is, appears similar at regular angular intervals.

The present disclosure has been made in view of the above circumstances, and aims to provide a coin recognition device, a coin recognition method, and a coin recognition program that can improve the angle-alignment performance for coins with a symmetrical pattern.

In order to solve the above-mentioned problems and achieve the above aim, (1) a first aspect of the present disclosure relates to a coin recognition device, including: an image acquisition unit configured to acquire an input image of a coin to be recognized; a reference angle acquisition unit configured to acquire a reference angle having a best matching score among matching scores obtained by performing matching between the input image and a pre-registered first reference image in increments of a first shift angle; a rotation angle determination unit configured to determine a rotation angle of the coin based on matching scores obtained by performing matching between the input image and a pre-registered second reference image at least at the reference angle and at a designated angle shifted from the reference angle by a specific angle; and a recognition unit configured to recognize the coin using the rotation angle of the coin determined by the rotation angle determination unit.
(2) In the coin recognition device described in (1) above, the specific angle may be predefined.
(3) In the coin recognition device described in (2) above, the specific angle may be predefined based on each denomination of coins to be recognized and based on each of front and back sides thereof.
(4) In the coin recognition device described in (2) above, the specific angle may be predefined based on each pattern of coins to be recognized.
(5) In the coin recognition device according to any one of (1) to (4) above, when the reference angle is taken as 0°, the designated angle may correspond to one of angles obtained by dividing 360° into equal parts.
(6) In the coin recognition device described in any one of (1) to (5) above, the recognition unit may be configured to recognize the coin as a coin to be rejected when a matching score calculated by the reference angle acquisition unit is abnormal.
(7) In the coin recognition device described in any one of (1) to (6) above, the recognition unit may be configured to recognize the coin as a coin to be rejected when the rotation angle determination unit fails to determine the rotation angle of the coin.
(8) In the coin recognition device described in any one of (1) to (7) above, the first reference image and the second reference image may be the same image.
(9) In the coin recognition device described in any one of (1) to (7) above, the first reference image and the second reference image may be images different from each other.
(10) In the coin recognition device described in any one of (1) to (9) above, the first reference image and the second reference image may each be predefined based on each denomination of coins to be recognized and based on each of front and back sides thereof.
(11) In the coin recognition device described in any one of (1) to (10) above, the reference angle acquisition unit may be configured to perform matching between the input image and the first reference image over an angular range of 360°, and the rotation angle determination unit may be configured to perform matching between the input image and the second reference image in increments of a second shift angle within each of a first angular range including the reference angle and a second angular range including the designated angle.
(12) In coin recognition device described in (11) above, when the first shift angle for matching performed by the reference angle acquisition unit is defined as Δφ1 and the second shift angle for matching performed by the rotation angle determination unit is defined as Δφ2, then an inequality Δφ2 ≤ Δφ1 may hold.
(13) In the coin recognition device described in (12) above, an inequality Δφ2 < Δφ1 may hold.

(14) A second aspect of the present disclosure relates to a coin recognition method, including: an image acquisition step of acquiring an input image of a coin to be recognized; a reference angle acquisition step of acquiring a reference angle having a best matching score among matching scores obtained by performing matching between the input image and a pre-registered first reference image in increments of a first shift angle; a rotation angle determination step of determining a rotation angle of the coin based on matching scores obtained by performing matching between the input image and a pre-registered second reference image at least at the reference angle and at a designated angle shifted from the reference angle by a specific angle; and a recognition step of recognizing the coin using the rotation angle of the coin determined in the rotation angle determination step.
(15) A third aspect of the present disclosure relates to a coin recognition program that causes a coin recognition device to execute: an image acquisition process of acquiring an input image of a coin to be recognized; a reference angle acquisition process of acquiring a reference angle having a best matching score among matching scores obtained by performing matching between the input image and a pre-registered first reference image in increments of a first shift angle; a rotation angle determination process of determining a rotation angle of the coin based on matching scores obtained by performing matching between the input image and a pre-registered second reference image at least at the reference angle and at a designated angle shifted from the reference angle by a specific angle; and a recognition process of recognizing the coin using the rotation angle of the coin determined in the rotation angle determination process.

The present disclosure can provide a coin recognition device, a coin recognition method, and a coin recognition program that can improve the angle-alignment performance for coins with a symmetrical pattern.

### BRIEF DESCRIPTION OF DRAWINGS

FIG. 1A is a schematic plan view of an example coin with a symmetrical pattern that is substantially symmetrical in the vertical direction.
FIG. 1B is a schematic plan view of an example coin with a symmetrical pattern that is substantially symmetrical in the vertical and horizontal directions.
FIG. 1C is a schematic plan view of an example coin with a symmetrical pattern that is periodic.
FIG. 2 is a block diagram illustrating an example configuration of a coin recognition device according to Embodiment 1.
FIG. 3 is a diagram showing an example waveform of matching scores obtained from matching performed by a reference angle acquisition unit in the case of the coin shown in FIG. 1A.
FIG. 4 is a diagram showing an example waveform of matching scores obtained from matching performed by a rotation angle determination unit in the case of the coin shown in FIG. 1A.
FIG. 5 is a flowchart illustrating an example operation of the coin recognition device according to Embodiment 1.
FIG. 6 is a block diagram illustrating an example configuration of a coin recognition device according to Embodiment 2.
FIG. 7 is a schematic side view of an example image sensor unit in the coin recognition device according to Embodiment 2.
FIG. 8 is a schematic plan view of a transport surface of the image sensor unit shown in FIG. 7.
FIG. 9 is diagram showing the internal structure of the image sensor unit shown in FIG. 7, with the transport path side cover removed.
FIG. 10 is a schematic cross-sectional view of the image sensor unit shown in FIG. 7.
FIG. 11 is a flowchart illustrating an example operation of the coin recognition device according to Embodiment 2.

### DESCRIPTION OF EMBODIMENTS

Hereinbelow, embodiments of the coin recognition device, coin recognition method, and coin recognition program according to the present disclosure are described with reference to the drawings. The following describes the present disclosure based on coin recognition devices, coin recognition methods, and coin recognition programs that are designed to recognize coins used as money. However, coins to be recognized in the present disclosure include coins used in gaming machines, as well as coins used as money. The following describes example coin recognition devices, example coin recognition methods, and example coin recognition programs.

The coin recognition device, coin recognition method, and coin recognition program according to the present disclosure can recognize coins with a symmetrical pattern, and can also recognize coins with a non-symmetrical pattern. The following mainly describes the cases of recognizing a coin with a symmetrical pattern.

The coin recognition program may be preinstalled in the coin recognition device or may be provided to the operator as a program stored in a computer-readable storage medium or via a network.

In the following description, components having the same or similar functions are designated by the same reference signs across different embodiments and drawings, and repeated descriptions of such components are omitted as appropriate.

The term "rotation angle" herein refers to an angle indicating how much an actual coin is shifted in the rotational direction relative to a desired preset angle.

### (Embodiment 1)

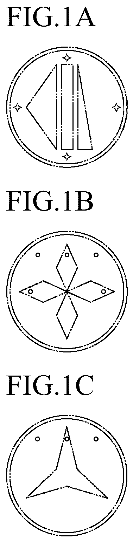

First, using FIG. 1A, FIG. 1B, and FIG. 1C, coins with a symmetrical pattern that can be the objects to be recognized by the coin recognition device according to the present embodiment are described. The coin shown in FIG. 1A has a pattern that is substantially symmetrical in the vertical direction and presents a similar pattern upon each 180° rotation. The coin shown in FIG. 1B has a pattern that is substantially symmetrical in the vertical and horizontal directions and presents a similar pattern upon each 90° rotation. The coin shown in FIG. 1C has a periodic pattern and presents a similar pattern upon each 120° rotation.

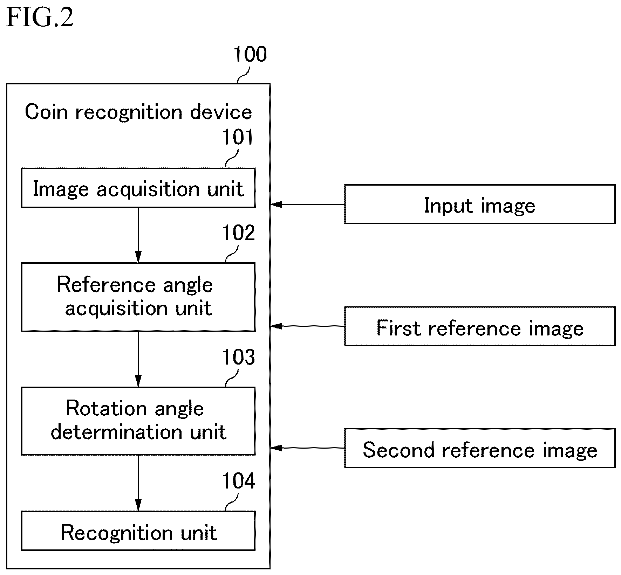

Next, using FIG. 2, the configuration of the coin recognition device according to the present embodiment is described.

As shown in FIG. 2, a coin recognition device 100 according to the present embodiment includes an image acquisition unit 101, a reference angle acquisition unit 102, a rotation angle determination unit 103, and a recognition unit 104.

The image acquisition unit 101 acquires an input image of a coin to be recognized. The image acquisition unit 101 may include an input interface that imports an input image of the coin acquired by an external image sensor unit into the coin recognition device 100, or may include an image sensor unit provided in the coin recognition device 100. The input interface may be of any type such as a connector, e.g., a USB terminal or a wired LAN terminal, or a communication device compatible with the wireless LAN standard or the Bluetooth^{®} standard, for example.

The input image may remain as a cropped image or may be an image obtained by applying a polar coordinate transformation to the cropped image. The cropped image is, for example, an image obtained by calculating the rising and falling coordinates of pixel values in each of the horizontal and vertical histograms, which are generated by accumulating all pixel values of an actual coin image including the coin region and its surrounding region, and then extracting a rectangular region enclosed by the calculated coordinates. The polar coordinate transformation is a process in which the central point of an image is calculated, the calculated central point is set as the origin of the polar coordinates, each pixel is represented by a rotation angle θ and a distance r from the central point, and the pixels are mapped into an r-θ space. Furthermore, the input image may have undergone an edge extraction process, and may further have undergone an edge normalization process. The edge extraction process is a process of calculating a change in density (edge strength) using an edge filter. The edge normalization process is a process of normalizing the edge strength calculated by the edge extraction process.

The reference angle acquisition unit 102 acquires a reference angle having a best matching score among matching scores obtained by performing matching between the input image and the pre-registered first reference image in increments of a first shift angle. Hereinafter, the matching performed by the reference angle acquisition unit 102 may also be referred to as "first matching". Through the first matching, a reference angle as a tentative (provisional) rotation angle of the coin to be recognized is acquired.

The first reference image is a template image used to determine the reference angle. The first reference image may be an image including substantially the entire pattern of a coin or may be an image including only a predetermined portion of the pattern, such as the part representing "10" in the pattern of a 10-yen coin. For matching time reduction, the first reference image may not be an image of the entire surface region of a coin but may be an image including only a predetermined surface region of the coin such as a region within a predetermined range of distance from the center of the coin. These conditions may be predefined for each denomination of coins to be recognized.

The reference angle acquisition unit 102 may perform first matching for each denomination candidate determined in advance based on features not dependent on the rotation angle of the coin (e.g., magnetic property, diameter, and the like of the coin), or may perform matching between the first reference image defined based on each denomination candidate and the input image.

The first shift angle is not limited and may appropriately be defined. For example, the first shift angle may be 1° or greater and 20° or less, may be 1° or greater and 10° or less, or may be, for example, 2.1°.

The expression "performing matching in increments of a first shift angle" refers to a process in which either the input image or the first reference image is shifted in a rotational direction in increments of a first shift angle, and matching is performed between the input image and the first reference image at each shifted position (each angle). First matching may be performed until either the input image or the first reference image is shifted in the rotational direction by 360°. For first matching and the later-described second matching, the process in which either the input image or the reference image (first or second reference image) is shifted and then matching is performed may be a process in which image data of one of the input image and the reference image, actually shifted in the rotational direction, is generated, and matching is performed between the shifted image data and the other of the input image and the reference image, or may be a process in which matching is performed between the input image and the reference image by shifting the starting pixel for reference in either the input image or the reference image.

Matching (first matching) between the input image and the first reference image may specifically be performed by a technique that involves, for example, calculating the product of pixel values at corresponding pixels of the input image and the first reference image for all pixels, and summing the calculated products.

The reference angle refers to an angle having the best matching score among matching scores resulting from first matching, i.e., an angle having the highest matching score. The reference angle acquisition unit 102 may acquire a waveform representing changes in the matching score, and determine the angle indicating the highest peak of the waveform as the reference angle.

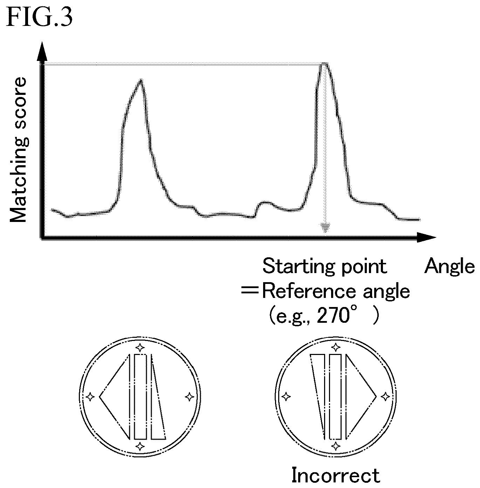

Using FIG. 3, a matching score waveform obtained from matching performed by the reference angle acquisition unit 102 is described. When first matching is performed between the input image and the first reference image at each angle while the input image is shifted (rotated) relative to the first reference image in increments of a first shift angle, a waveform as shown in FIG. 3 is obtained. The angle at which the waveform exhibits the highest peak is used as the reference angle. The input images of the coin shown in FIG. 3 are presented in orientations corresponding to the respective angles at which the waveform exhibits peaks. Additionally, the input images of the coin shown in FIG. 3 exhibit similar patterns at each 180° rotation. This indicates a possibility that, as shown in FIG. 3, the angle at which the image is upside down (incorrect) is acquired as the reference angle.

The rotation angle determination unit 103 performs matching between the input image and a pre-registered second reference image at least at the reference angle and at a designated angle shifted from the reference angle by a specific angle, and determines the rotation angle of the coin based on the matching scores. Hereinafter, this matching performed by the rotation angle determination unit 103 may also be referred to as "second matching". In other words, as described above, first matching is performed to acquire a reference angle as a tentative rotation angle, and second matching is performed at the reference angle and additionally at the designated angle to identify the rotation angle. In this manner, matching is performed not only at the reference angle but also at a designated angle shifted from the reference angle by a specific angle, so that matching can be performed again at a plurality of angles including the reference angle. This can improve the angle-alignment performance for coins with a symmetrical pattern. Additionally, the angle-alignment performance can be improved without a significant increase in processing time.

The expression "performing matching between the input image and the second reference image at the reference angle and a designated angle shifted from the reference angle by a specific angle" refers to a process in which either the input image or the second reference image is shifted in the rotational direction by the reference angle and a designated angle, and matching is performed between the input image and the second reference image at each position (each angle).

Matching (second matching) between the input image and the second reference image may specifically be performed by a technique that involves, for example, calculating the product of pixel values at corresponding pixels of the input image and the second reference image for all pixels, and summing the calculated products. The specific matching method and calculation technique for matching may be the same method or different methods between first matching and second matching.

The designated angle refers to an angle shifted from the reference angle by a specific angle, and is an angle likely corresponding to the rotation angle of the coin to be recognized in addition to the reference angle. The designated angle may be defined based on the symmetry of the pattern of each denomination of coins to be recognized. The designated angle may also be defined for each denomination of coins to be recognized.

When the reference angle is taken as 0°, the designated angle may correspond to one of angles obtained by dividing 360° into equal parts. Changing the number of divisions as appropriate enables handling of various periodic patterns. The designated angle when the reference angle is taken as 0° may be one of angles obtained by dividing 360° into N equal parts (wherein N is an integer satisfying N ≥ 2), i.e., 360° × (1/N), 360° × (2/N), ..., or 360° × ((N - 1)/N). The number of divisions N can be defined as appropriate for each coin to be recognized, and may be 2 ≤ N ≤ 12, or may be 2 ≤ N ≤ 10. The designated angle when the reference angle is taken as 0° corresponds to, for example, 180° when the number of divisions is 2, 120° and 240° when the number of divisions is 3, and 90°, 180°, and 270° when the number of divisions is 4. In the case where the pattern of the coin to be recognized exhibits no symmetry, the number of divisions N may be 1.

The specific angle, i.e., the difference between the reference angle and the designated angle, may be predefined. For example, the coin recognition device 100 may store one or more predefined angles as specific angles.

Specifically, the specific angle may be predefined based on each denomination of coins to be recognized and based on each of the front and back sides thereof. When the specific angle is defined for each denomination and each of the front and back sides thereof, a specific angle suitable for each denomination and each of the front and back sides thereof can be employed. This can further improve the angle-alignment performance for each denomination of coins to be recognized. For example, when the reference angle acquisition unit 102 performs first matching for each denomination candidate as described above, the rotation angle determination unit 103 may also perform second matching for each of these denomination candidates, and in each second matching process, a reference angle acquired for the denomination candidate and the specific angle corresponding to the denomination candidate and the front or back side thereof may be used.

The specific angle may be predefined based on each pattern of coins to be recognized. When the specific angle is defined based on each pattern, a specific angle suitable for the pattern can be employed. The patterns of coins to be recognized typically vary by denomination. Thus, defining the specific angle for each pattern enables further improvement in the angle-alignment performance for each denomination of coins to be recognized.

The second reference image may be a template image used to exclude angles likely to be misidentified as the rotation angle. The second reference image may be an image including substantially the entire pattern of a coin or may be an image including only a predetermined portion of the pattern, such as the part representing "10" in the pattern of a 10-yen coin. For matching time reduction, the second reference image may not be an image of the entire surface region of a coin but may be an image including only a predetermined surface region of the coin such as a region within a predetermined range of distance from the center of the coin.

The first reference image and the second reference image may be intended to represent the same region of a coin to be recognized, or represent different regions (which may overlap or may not overlap) of the coin to be recognized.

Similar to the reference angle acquisition unit 102, the rotation angle determination unit 103 may perform second matching for each denomination candidate determined in advance based on features not dependent on the rotation angle of the coin (e.g., magnetic property, diameter, and the like of the coin). In this case, second matching may be performed at the designated angle defined for each denomination candidate. Also, the rotation angle determination unit 103 may perform matching between the second reference image defined for each denomination candidate and the input image.

First matching and second matching may each be performed for each denomination candidate, or only one of first matching and second matching may be performed for each denomination candidate.

The first reference image and the second reference image may be the same image. The expression "the same image" means that they are the same in terms of: (1) the included pattern; (2) the target region on the coin surface for the reference image; and (3) the image sharpness (blurriness). The first reference image and the second reference image may also be images different from each other. The expression "images different from each other" refers to a state where they differ in terms of at least one of the points (1) to (3) above. When the first reference image and the second reference image are made different, for example, the second reference image may serve as a stricter reference than the first reference image.

The first reference image and the second reference image may each be predefined based on each denomination of coins to be recognized and based on each of the front and back sides thereof. When the first reference image and the second reference image are each predefined based on each denomination and based on each of the front and back sides thereof, a first reference image and a second reference image suitable for the denomination and the front or back side thereof can be used. This can further improve the angle-alignment performance for each denomination of coins to be recognized.

The reference angle acquisition unit 102 may perform matching (first matching) between the input image and the first reference image over an angular range of 360°. The rotation angle determination unit 103 may perform matching (second matching) between the input image and the second reference image in increments of a second shift angle within each of a first angular range including the reference angle and a second angular range including the designated angle. When first matching is performed over an angular range of 360° and second matching is performed not only at the reference angle and the designated angle but also at angles close to these angles, the rotation angle of a coin to be recognized can be identified with even higher accuracy.

When the reference angle is defined as θ1 and the designated angle is defined as θ2, the first angular range may correspond to the range of θ1 ± Δθ1 (including the boundary values). Here, for example, Δθ1 may be 0.5° or greater and 10° or less, may be 1° or greater and 5° or less, or may be 2°, for example. Similarly, the second angular range may correspond to the range of θ2 ± Δθ2 (including the boundary values). Here, for example, Δθ2 may be 0.5° or greater and 10° or less, may be 1° or greater and 5° or less, or may be 2°, for example. Δθ1 may be the same as or different from Δθ2. The second angular range is defined for each designated angle. When a plurality of second angular ranges are defined for each of a plurality of designated angles, then Δθ2 values in the plurality of second angular ranges may be the same as or different from each other.

The second shift angle is not limited and may appropriately be defined. For example, the second shift angle may be 0.5° or greater and 10° or less, may be 1° or greater and 5° or less, or may be, for example, 1°.

When the first shift angle for first matching performed by the reference angle acquisition unit 102 is defined as Δφ1 and the second shift angle for second matching performed by the rotation angle determination unit 103 is defined as Δφ2, then the inequality Δφ2 ≤ Δφ1 may hold. When Δφ1 and Δφ2 are defined to satisfy the above inequality, matching can be performed in greater detail for angles likely corresponding to the rotation angle of the coin to be recognized, which enables identification of the rotation angle of the coin to be recognized with higher accuracy.

When Δφ2 equals Δφ1, the first reference image and the second reference image may be images different from each other. This can make first matching and second matching different from each other.

Δφ1 and Δφ2 may satisfy the inequality Δφ2 < Δφ1. When Δφ1 and Δφ2 are defined to satisfy the above inequality, matching can be performed in greater detail for angles likely corresponding to the rotation angle of the coin to be recognized, which enables identification of the rotation angle of the coin to be recognized with higher accuracy. The difference between Δφ2 and Δφ1 (i.e., Δφ1 - Δφ2) may be, for example, 0.5° or greater and 5° or less, or may be 1° or greater and 2° or less.

The rotation angle determination unit 103, as described above, performs second matching and determines the rotation angle of the coin based on the matching scores. Specifically, the rotation angle determination unit 103 may determine, as the rotation angle of the coin to be recognized, the angle at which a matching score exceeding the threshold and being the highest among matching scores resulting from second matching is obtained.

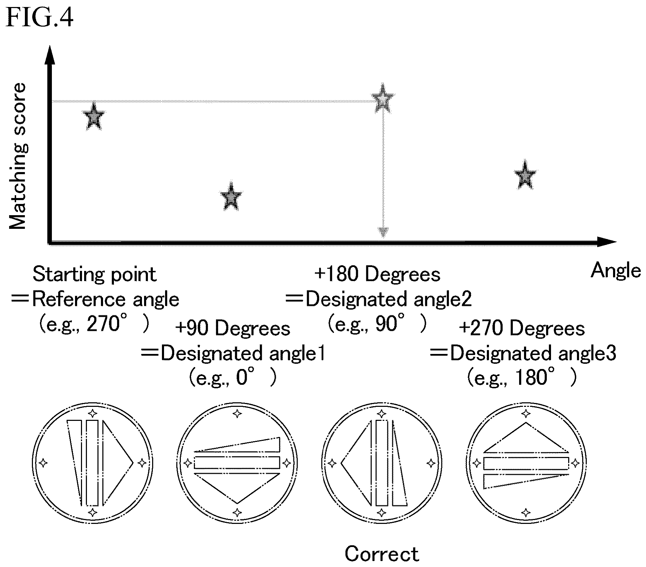

Using FIG. 4, a matching score waveform obtained from matching performed by the rotation angle determination unit 103 is described. When second matching is performed between the input image and the second reference image at the reference angle and designated angles (designated angles 1 to 3 in FIG. 4) each shifted (rotated) from the reference angle, serving as the starting point, by a specific angle, the matching scores shown in FIG. 4 are obtained. The phrase "serving as a starting point" does not indicate that the reference angle is set to 0°. The angle at which a matching score exceeding the threshold and being the highest among these matching scores is obtained is determined as the rotation angle of the coin to be recognized. The input images of the coin shown in FIG. 4 are presented in orientations corresponding to the reference angle and the designated angles 1 to 3. As shown in FIG. 4, when the rotation angle determination unit 103 performs matching not only at the reference angle but also at the designated angles shifted from the reference angle by the respective specific angles, the correct angle can be determined as the rotation angle.

Although FIG. 4 shows a case where second matching is performed at the reference angle and the designated angles, second matching may be performed in increments of a second shift angle in the first angular range including the reference angle and in a plurality of second angular ranges including the respective designated angles as described above.

The recognition unit 104 recognizes a coin using the rotation angle of the coin determined by the rotation angle determination unit 103. For example, the recognition unit 104 performs matching in greater detail based on the rotation angle of the coin determined by the rotation angle determination unit 103, thereby determining the denomination and the like of the coin.

The recognition unit 104 may recognize a coin by any method such as a known image verifying method. For example, as in the image matching method for comparing an image of an actual coin to be recognized with a template described in JP 4563741 B, a certain density is used as a threshold to generate, from the template, a positive template (corresponding to an image of a region where an edge is present) and a negative template (corresponding to an image of a region where an edge is absent), and these positive and negative templates are used for comparison with an image indicating the correlation result between the image of the actual coin to be recognized and feature information. As a result of the comparison, four types of images are obtained: (A+) an image indicating that an edge appears where it should appear; (A-) an image indicating that an edge does not appear where it should appear; (B+) an image indicating that an edge appears where it should not appear; and (B-) an image indicating that an edge does not appear where it should not appear. When the pixel values of these four types of images are substituted into a discriminant formula to calculate a matching score, the identification result is obtained.

Also, the recognition unit 104 may recognize a coin by a method of comparing the edge feature in the detected features with the edge feature in the template. The edge feature can be, for example, extracted using an edge filter for extracting the directionality of the line.

Furthermore, the details of recognition performed by the recognition unit 104 may be, but are not limited to, any of denomination determination, authenticity determination, fitness determination, and a combination of any of these determinations.

When a matching score calculated by the reference angle acquisition unit 102 is abnormal, the recognition unit 104 may recognize the coin as a coin to be rejected. The cases where a matching score is abnormal may include a case where the matching score transition (shown as a waveform) is abnormal (e.g., no peak is present).

The recognition unit 104 may recognize a coin as a coin to be rejected when the rotation angle determination unit 103 fails to determine the rotation angle of the coin. The case where the rotation angle is not determined may be, for example, a case where none of the matching scores exceed the threshold.

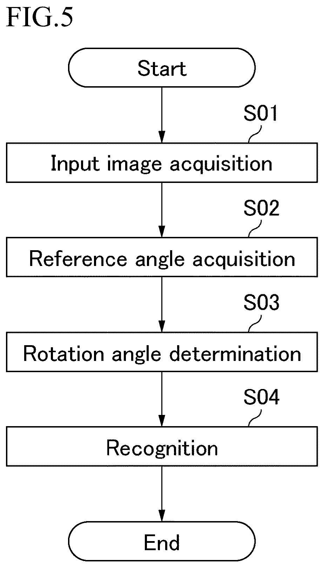

Next, the operation of the coin recognition device according to the present embodiment is described with reference to FIG. 5.

As shown in FIG. 5, in the coin recognition device 100, first, the image acquisition unit 101 acquires an input image of a coin to be recognized (step S01).

Subsequently, the reference angle acquisition unit 102 acquires a reference angle having the best matching score among matching scores obtained by performing matching between the input image and the pre-registered first reference image in increments of a first shift angle (step S02).

Next, the rotation angle determination unit 103 determines the rotation angle of the coin based on matching scores obtained by performing matching between the input image and the pre-registered second reference image at least at the reference angle and at a designated angle shifted from the reference angle by a specific angle (step S03).

Then, the recognition unit 104 recognizes the coin using the rotation angle of the coin determined by the rotation angle determination unit 103 (step S04), whereby the operation of the coin recognition device 100 is completed.

The reference angle acquisition unit 102, the rotation angle determination unit 103, and the recognition unit 104 may each be implemented by a corresponding program executed by the later-described control unit.

### (Embodiment 2)

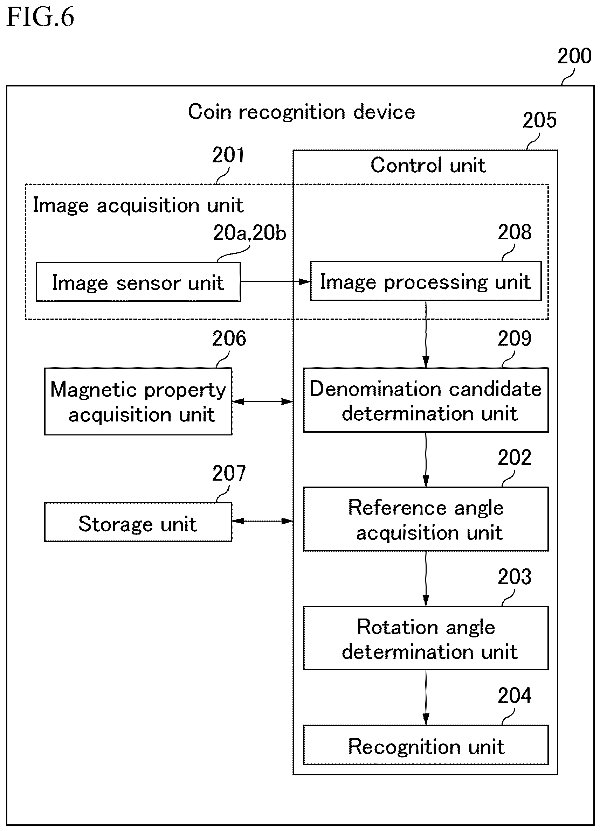

The configuration of the coin recognition device according to Embodiment 2 is described with reference to FIG. 6.

As shown in FIG. 6, the coin recognition device 200 according to the present embodiment includes an image acquisition unit 201, a magnetic property acquisition unit 206, a storage unit 207, and a control unit 205. The control unit 205 includes an image processing unit 208, a denomination candidate determination unit 209, a reference angle acquisition unit 202, a rotation angle determination unit 203, and a recognition unit 204.

The image acquisition unit 201 acquires an input image of a coin to be recognized. The image acquisition unit 201 is composed of image sensor units 20a and 20b and an image processing unit 208.

The specific configurations of the image sensor units 20a and 20b in the image acquisition unit 201 according to the present embodiment are described.

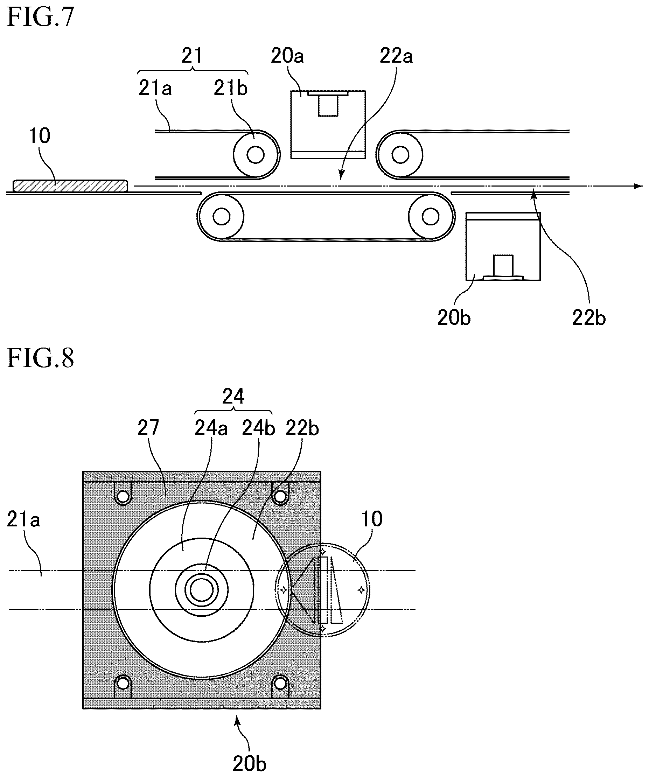

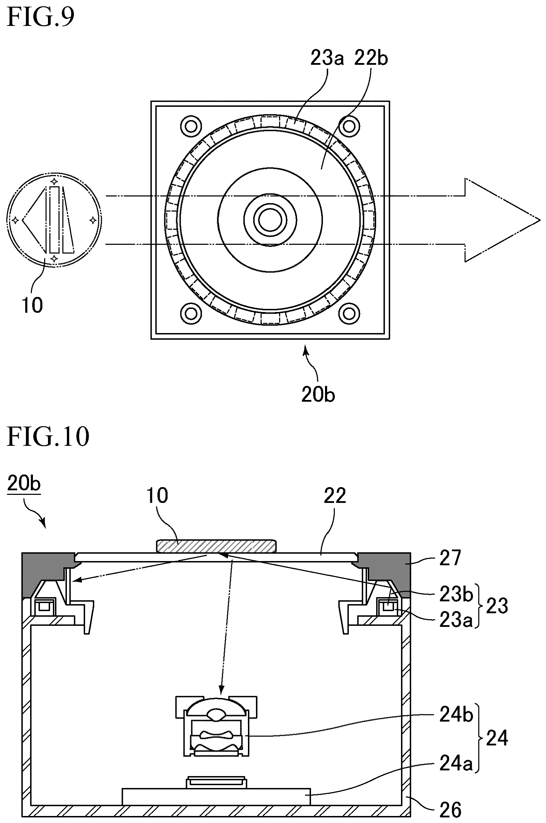

Using FIG. 7 to FIG. 10, the configurations of image sensor units provided as parts of an image acquisition unit in a coin recognition device are described. The arrow shown in each of FIG. 7 and FIG. 9 indicates the transport direction of coins 10 along the transport path from upstream to downstream. The solid-line arrow in FIG. 10 indicates the optical path of light emitted to the coin 10, and the dash-dot-dot-line arrows indicate the optical paths of light reflected from the coin 10.

As shown in FIG. 7, coins 10 are transported one by one with a space in between by transport units 21 each disposed above or below the transport path and each defined by a transport belt 21a and other components. The coins 10 pass through imaging areas 22a and 22b for the pair of image sensor units 20a and 20b disposed above and below the transport path, respectively. The transport belts 21a are each driven by a driving device including a pulley 21b and a motor, for example.

The image sensor unit 20a in the upstream of the transport path and the image sensor unit 20b in the downstream of the transport path have structures that are symmetrical about the transport surface. The pair of image sensor units 20a and 20b captures images of the front and back sides of each coin 10. This enables acquisition of actual coin images of both sides of the coin 10. When all the coins 10 are transported along the transport path with the same sides of the coins placed face down or up by a coin front/back setting mechanism or any other device, the image sensor unit 20a or 20b may be provided alone. No coin front/back setting mechanism may be provided, and only one of the image sensor units 20a and 20b may be provided.

The image sensor units 20a and 20b each include a transparent portion 22 having a circular planar shape and disposed for the imaging area 22a or 22b, a lighting unit 23 that irradiates the imaging area 22a or 22b with light, and an imaging unit 24 that captures an image of the imaging area 22a or 22b. With this structure, each coin 10 passing through the imaging area 22a or 22b can be imaged under the light.

Specifically, the lighting unit 23 and the imaging unit 24 are disposed inside a box-shaped housing 26 with its transparent portion 22 side open, and a transport path side cover 27 is placed on the top of the housing 26. The transparent portion 22 is provided in the center of the transport path side cover 27. The transparent portion 22 is made of a material excellent in strength and transparency, and may be made of sapphire glass, for example.

The lighting unit 23 is an annular lighting that is provided in the upper portion inside the housing 26 and surrounds the imaging unit 24 (imaging area 22a or 22b) in a plan view. The lighting unit 23 includes a plurality of light-emitting elements 23a arranged in an annular pattern and an annular prism (light guide) 23b on the light-emitting elements 23a.

The lighting unit 23 may include a low angle light source that emits light at an irradiation angle relative to the coin surface (the upper surface of the transparent portion 22) of greater than 0 degrees and not greater than 45 degrees. As shown in FIG. 10, a component of light emitted from a low angle light source and specularly reflected from the coin surface is not incident on the imaging unit 24 while a component of the light diffusely reflected from the coin surface is incident on the imaging unit 24. Thus, a lighting with low angle light sources is advantageous in detection of an uneven pattern on the coin surface.

The light-emitting elements 23a are, for example, light emitting diodes (LEDs). Light emitted from each light-emitting element 23a enters the prism 23b. The prism 23b has, as shown in FIG. 10, a bottom surface (light incidence surface) facing the emission surface of the light-emitting element 23a, a reflection surface that reflects light, incident on the bottom surface and travelling upward, toward the transparent portion 22, and a light exit surface facing the transparent portion 22. The lighting unit 23 may include a light diffusion film having a function of diffusing light between the light exit surface of the prism 23b and the transparent portion 22.

The imaging unit 24 includes a photoelectric conversion unit 24a where a CMOS image sensor, a CCD image sensor, or other components are arranged, and a lens unit 24b that receives light reflected from a coin 10 passing through the imaging area 22a or 22b and forms an image on the light receiving surface of the photoelectric conversion unit 24a. The imaging unit 24 is oriented to the direction perpendicular to the imaging area 22a or 22b.

The input image acquired by the image acquisition unit 201 is obtained by cropping actual coin images acquired by the image sensor units 20a and 20b and applying a polar coordinate transformation to the resulting cropped images. Using an input image that has undergone a polar coordinate transformation reduces the processing load for matching.

Specifically, the image processing unit 208 first acquires actual coin images from the image sensor units 20a and 20b to generate cropped images. The addresses of the individual pixels in each of the generated cropped images are represented as (x, y) and the pixel values are represented as p. The image processing unit 208 performs an edge extraction process and an edge normalization process on the cropped image (x, y, p) to generate a normalized edge image (x, y, z), where z represents a feature amount (edge strength) for each pixel of the normalized edge image. The edge filter may be, for example, the Sobel operator, Roberts operator, or Prewitt operator. The image processing unit 208 then applies a polar coordinate transformation to the normalized edge image (x,y,z) to generate a polar coordinate image (θ, r, z'), where z' is obtained by converting the directional component of the feature amount z in the orthogonal coordinate system into a polar coordinate component. Also, the image processing unit 208 may first apply a polar coordinate transformation to the cropped image (x, y, p) to generate a polar coordinate image (θ, r, p'), and then perform the edge extraction process and the edge normalization process to generate a normalized edge image (θ, r, z'). The image obtained by the series of processes performed by the image processing unit 208 is used as the input image in the subsequent matching processes.

The magnetic property acquisition unit 206 includes a magnetic sensor that detects the magnetic property to detect the magnetic property of the coin to be recognized.

The storage unit 207 is composed of a non-volatile storage device such as a semiconductor memory or a hard disk drive, for example, and stores various types of programs used to control the coin recognition device 200 and various types of data, including the first reference image, the second reference image, and the specific angle.

The control unit 205 is a controller that controls the components of the coin recognition device 200, and is composed of programs for executing various types of processes stored in the storage unit 207, a central processing unit (CPU) that executes the programs, and various types of hardware devices (e.g., field programmable gate array (FPGA)) controlled by the CPU, for example. The control unit 205 controls the components of the coin recognition device 200 according to the programs stored in the storage unit 207, based on signals output from the components of the coin recognition device 200 and control signals from the control unit 205. The control unit 205 also exhibits the functions of the image processing unit 208, the denomination candidate determination unit 209, the reference angle acquisition unit 202, the rotation angle determination unit 203, and the recognition unit 204 by executing the programs stored in the storage unit 207.

The denomination candidate determination unit 209 determines (extracts) denomination candidates of the coin to be recognized, based on the coin diameter obtained from the actual coin images acquired by the image sensor units 20a and 20b, and the magnetic property of the coin detected by the magnetic property acquisition unit 206. The number of denomination candidates is one or more and may be plural.

The reference angle acquisition unit 202 performs first matching between the input image generated by the image processing unit 208 and the pre-registered first reference image in increments of a first shift angle. For example, matching is performed in 2.1° increments up to 360°. The first reference image is generated for each denomination of coins from learning images as coin models, and is prestored in the storage unit 207 as a template image. For matching time reduction, first matching is performed between the parts, not the entire regions, of the respective input image and first reference image. The parts are predefined for each denomination of coins.

The reference angle acquisition unit 202 then acquires a reference angle having the best matching score based on the results of first matching.

The reference angle acquisition unit 202 acquires the reference angle for each denomination candidate by performing first matching for each denomination candidate determined by the denomination candidate determination unit 209.

The rotation angle determination unit 203 performs second matching between the input image generated by the image processing unit 208 and the pre-registered second reference image at least at the reference angle and at a designated angle shifted from the reference angle by a specific angle. For example, second matching is performed in increments of a second shift angle (for example, in 1° increments) in a first angular range of the reference angle ± 2° and a second angular range of the designated angle ± 2°. The second reference image is generated for each denomination of coins from learning images as coin models, and is prestored in the storage unit 207 as a template image. For matching time reduction, second matching is performed between parts, not the entire regions, of the respective input image and second reference image. The parts (which may be the same regions as in first matching or may be different regions from first matching) are predefined for each denomination of coins.

The first reference image and the second reference image may be the same image or may be images different from each other.

The rotation angle determination unit 203 then determines the rotation angle of the coin based on the matching scores calculated in second matching. Specifically, the rotation angle determination unit 203 determines, as the rotation angle of the coin, an angle at which a matching score exceeding the threshold and being the highest among matching scores resulting from second matching is obtained.

The rotation angle determination unit 203 determines the rotation angle of the coin for each denomination candidate by performing second matching for each denomination candidate determined by the denomination candidate determination unit 209.

The recognition unit 204 recognizes the coin using the rotation angle of the coin determined by the rotation angle determination unit 203. Specifically, the recognition unit 204 rotates each of the actual coin images acquired by the image sensor units 20a and 20b by the rotation angle of the coin determined by the rotation angle determination unit 203 to perform matching in greater detail using the rotated images, thereby determining the denomination of the coin. The recognition unit 204 also performs the matching process for each denomination candidate determined by the denomination candidate determination unit 209, and determines the denomination candidate yielding the best result as the denomination of the coin.

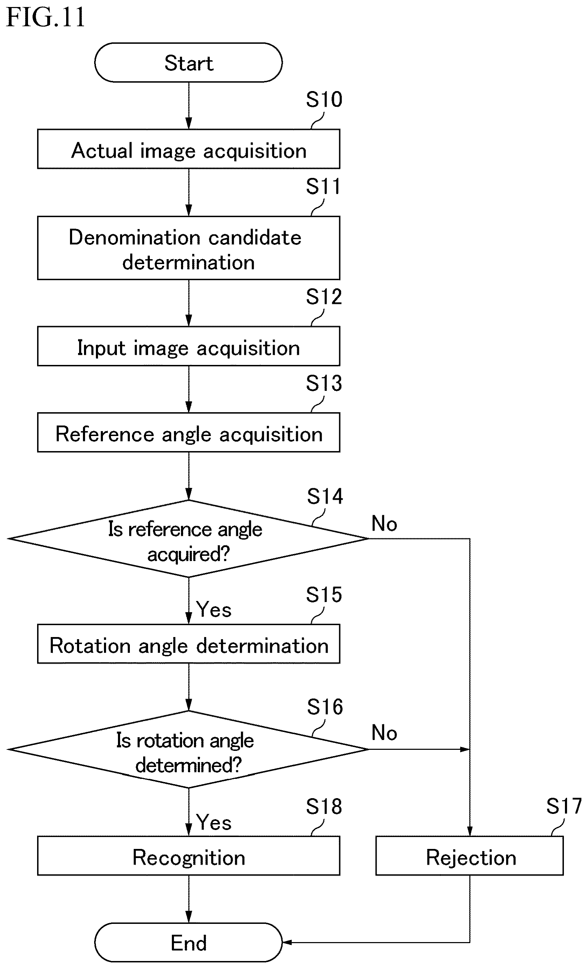

Next, using FIG. 11, the operation of the coin recognition device according to the present embodiment is described.

As shown in FIG. 11, in the coin recognition device 200, first, the image sensor units 20a and 20b of the image acquisition unit 201 each acquire an actual coin image of a coin to be recognized (step S10).

Next, the denomination candidate determination unit 209 determines (extracts) denomination candidates of the coin to be recognized based on the coin diameter obtained using the actual coin images acquired by the image sensor units 20a and 20b and the magnetic property of the coin detected by the magnetic property acquisition unit 206 (step S11).

Subsequently, the image processing unit 208 of the image acquisition unit 201 acquires (generates) input images of the coin to be recognized using the actual coin images acquired by the image sensor units 20a and 20b (step S12).

The order of steps S11 and S12 is not limited and may be changed as appropriate.

Next, the reference angle acquisition unit 202 acquires a reference angle having the best matching score among matching scores resulting from matching between the input image acquired in step S12 and the pre-registered first reference image in increments of a first shift angle (step S13). Processes in step S13 and subsequent steps are performed on each of the two input images acquired in step S12.

When the calculated matching score is abnormal and the reference angle is not acquired (step S14, No), the coin may be recognized as a coin to be rejected (step S17), and then the operation of the coin recognition device 200 may be completed.

When the reference angle is acquired (step S14, Yes), the rotation angle determination unit 203 determines the rotation angle of the coin based on matching scores obtained by performing matching between the input image acquired in step S12 and the pre-registered second reference image at least at the reference angle and a designated angle shifted from the reference angle by a specific angle (step S15).

When the rotation angle is not determined (step S16, No), the coin may be recognized as a coin to be rejected (step S17), and then the operation of the coin recognition device 200 may be completed.

When the rotation angle is determined (step S16, Yes), the recognition unit 204 recognizes the coin using the rotation angle of the coin determined by the rotation angle determination unit 203 (step S18), whereby the operation of the coin recognition device 200 is completed.

### (Modified Example 1)

The above embodiments describe the cases where the specific angle defining the shift from the reference angle in second matching is predefined. However, the specific angle may not be predefined, and the angle defining the shift from the reference angle may be calculated based on the data obtained from the coin to be recognized.

For example, one or more angles at which the matching score waveform acquired by the reference angle acquisition unit exhibits a peak may be used as a designated angle. Also, the symmetry of the pattern of a coin to be recognized may be identified from the number of peaks of the matching score waveform acquired by the reference angle acquisition unit, and the angle defining the shift from the reference angle may be calculated according to the symmetry, which may then be used as a designated angle.

### (Modified Example 2)

The above embodiments describe the cases where when the rotation angle determination unit fails to determine the rotation angle of a coin, the recognition unit recognizes the coin as a coin to be rejected. However, when the rotation angle determination unit fails to determine the rotation angle of the coin, then the rotation angle determination unit may further perform matching one or more times. In such cases, the specific matching methods and the calculation methods for matching may be varied for each matching process.

The embodiments were described with reference to the drawings. The present disclosure is not limited to the embodiments. The structures of the embodiments may be combined or modified as appropriate within the spirit of the present disclosure.

### INDUSTRIAL APPLICABILITY

As described above, the present disclosure provides a technique useful in improving the angle-alignment performance for coins with a symmetrical pattern.

### REFERENCE SIGNS LIST

10: coin
20a, 20b: image sensor unit
21: transport unit
21a: transport belt
21b: pulley
22: transparent portion
22a, 22b: imaging area
23: lighting unit
23a: light-emitting element
23b: prism (light guide)
24: imaging unit
24a: photoelectric conversion unit
24b: lens unit
26: housing
27: transport path side cover
100, 200: coin recognition device
101, 201: image acquisition unit
102, 202: reference angle acquisition unit
103, 203: rotation angle determination unit
104, 204: recognition unit
205: control unit
206: magnetic property acquisition unit
207: storage unit
208: image processing unit
209: denomination candidate determination unit

## Claims

1. A coin recognition device, comprising:
an image acquisition unit configured to acquire an input image of a coin to be recognized;
a reference angle acquisition unit configured to acquire a reference angle having a best matching score among matching scores obtained by performing matching between the input image and a pre-registered first reference image in increments of a first shift angle;
a rotation angle determination unit configured to determine a rotation angle of the coin based on matching scores obtained by performing matching between the input image and a pre-registered second reference image at least at the reference angle and at a designated angle shifted from the reference angle by a specific angle; and
a recognition unit configured to recognize the coin using the rotation angle of the coin determined by the rotation angle determination unit.

2. The coin recognition device according to claim 1,
wherein the specific angle is predefined.

3. The coin recognition device according to claim 2,
wherein the specific angle is predefined based on each denomination of coins to be recognized and based on each of front and back sides thereof.

4. The coin recognition device according to claim 2,
wherein the specific angle is predefined based on each pattern of coins to be recognized.

5. The coin recognition device according to any one of claims 1 to 4,
wherein when the reference angle is taken as 0°, the designated angle corresponds to one of angles obtained by dividing 360° into equal parts.

6. The coin recognition device according to any one of claims 1 to 5,
wherein the recognition unit is configured to recognize the coin as a coin to be rejected when a matching score calculated by the reference angle acquisition unit is abnormal.

7. The coin recognition device according to any one of claims 1 to 6,
wherein the recognition unit is configured to recognize the coin as a coin to be rejected when the rotation angle determination unit fails to determine the rotation angle of the coin.

8. The coin recognition device according to any one of claims 1 to 7,
wherein the first reference image and the second reference image are the same image.

9. The coin recognition device according to any one of claims 1 to 7,
wherein the first reference image and the second reference image are images different from each other.

10. The coin recognition device according to any one of claims 1 to 9,
wherein the first reference image and the second reference image are each predefined based on each denomination of coins to be recognized and based on each of front and back sides thereof.

11. The coin recognition device according to any one of claims 1 to 10,
wherein the reference angle acquisition unit is configured to perform matching between the input image and the first reference image over an angular range of 360°, and
the rotation angle determination unit is configured to perform matching between the input image and the second reference image in increments of a second shift angle within each of a first angular range including the reference angle and a second angular range including the designated angle.

12. The coin recognition device according to claim 11,
wherein when the first shift angle for matching performed by the reference angle acquisition unit is defined as Δφ1 and the second shift angle for matching performed by the rotation angle determination unit is defined as Δφ2, then an inequality Δφ2 ≤ Δφ1 holds.

13. The coin recognition device according to claim 12,
wherein an inequality Δφ2 < Δφ1 holds.

14. A coin recognition method, comprising:
an image acquisition step of acquiring an input image of a coin to be recognized;
a reference angle acquisition step of acquiring a reference angle having a best matching score among matching scores obtained by performing matching between the input image and a pre-registered first reference image in increments of a first shift angle;
a rotation angle determination step of determining a rotation angle of the coin based on matching scores obtained by performing matching between the input image and a pre-registered second reference image at least at the reference angle and at a designated angle shifted from the reference angle by a specific angle; and
a recognition step of recognizing the coin using the rotation angle of the coin determined in the rotation angle determination step.

15. A coin recognition program that causes a coin recognition device to execute:
an image acquisition process of acquiring an input image of a coin to be recognized;
a reference angle acquisition process of acquiring a reference angle having a best matching score among matching scores obtained by performing matching between the input image and a pre-registered first reference image in increments of a first shift angle;
a rotation angle determination process of determining a rotation angle of the coin based on matching scores obtained by performing matching between the input image and a pre-registered second reference image at least at the reference angle and at a designated angle shifted from the reference angle by a specific angle; and
a recognition process of recognizing the coin using the rotation angle of the coin determined in the rotation angle determination process.
